# EUROPEAN PATENT APPLICATION

(11) **EP 3 094 048 A1**
(43) Date of publication of application: **16.11.2016**
(21) Application number: 14878014.1
(22) Date of filing: 16.06.2014
(51) Int. Cl.: H04L 12/26

(54) **METHOD AND DEVICE FOR MONITORING NETWORK TRAFFIC, CONTROLLER AND STORAGE MEDIUM**

(30) Priority: 10.01.2014 CN 201410011177
(71) Applicant: ZTE Corporation, Shenzhen, Guangdong 518057 (CN)
(72) Inventor: XIE, Zhenhua, Shenzhen Guangdong 518057 (CN)
(74) Representative: Brevalex
(86) International application number: PCT/CN2014/080016
(87) International publication number: WO 2015/103852

(57) **Abstract**

Proposed are a method and device for monitoring network traffic, a controller and a storage medium. The method comprises: receiving control information and an instrument and/or an instrument group which are issued by a controller, wherein the instrument group comprises one or more instruments, and the control information associates a monitored object with the instrument or an instrument of the instrument group; and sending traffic monitoring information about the monitored object to the controller according to the received control information and instrument and/or instrument group. The embodiments of the present disclosure reduce the network overhead of a controller and an SDN switch.

## Description

### TECHNICAL FIELD

The present disclosure relates to the field of software defined network (SDN), and in particular to a method and device for monitoring network traffic, a controller and a storage medium.

### BACKGROUND

The software defined network SDN is a novel network architecture which is proposed by the clean slate research team of Stanford university, the core technology OpenFlow realizes the flexible control of network traffic by separating a control plane of a network device from a data plane, thereby providing a good platform for innovation of a core network and an application. Network elements of an SDN system include a controller and a switch, the controller controls the forwarding of a data flow through transmission of a flow table to the switch, and the switch forwards data according to the flow table.

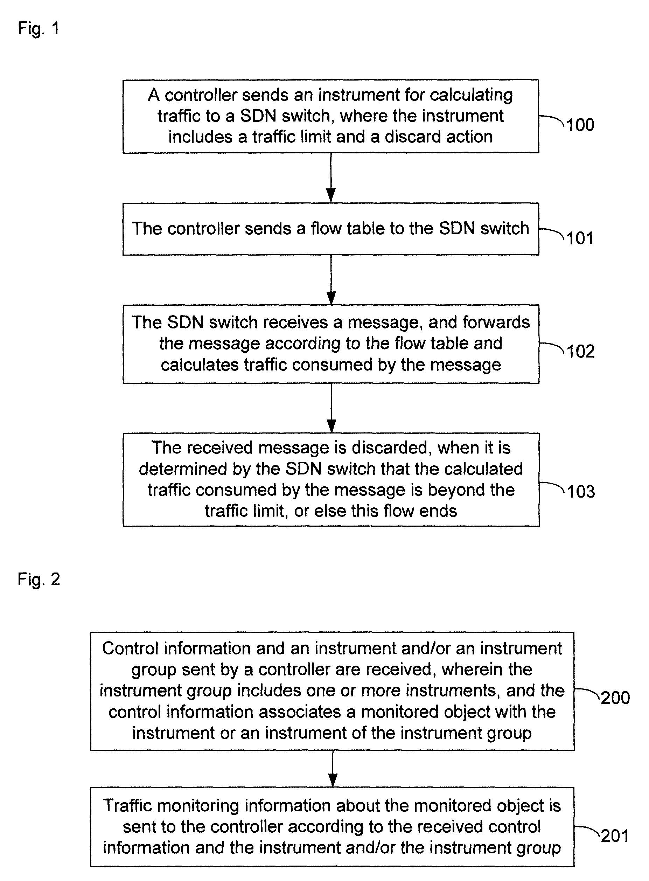

An existing method for forwarding a message by a SDN system is shown in Fig. 1, and includes steps 100 to 103. Step 100 includes that a controller sends an instrument for calculating traffic to an SDN switch, where the instrument includes a traffic limit and a discard action;
in this step, if different traffic control is needed for different messages, the controller may send multiple instruments to the SDN switch, and then instructs the SDN switch through a flow table sent by the controller to the SDN switch to limit traffic of a message according to a specific instrument.

Step 101 includes that the controller sends a flow table to the SDN switch.

Step 102 includes that the SDN switch receives a message, and forwards the message according to the flow table and calculates traffic occupied by the message;

specifically, the SDN switch may be instructed through the flow table to perform a calculation upon the reception of the message, or may be instructed to perform a calculation in each preset period, wherein the preset period may be set depending on specific conditions, which may be three minutes or may be five minutes, or may be a longer period if the network is not blocked.

Step 103 includes that the received message is discarded when it is determined by the SDN switch that the calculated traffic occupied by the message is beyond the traffic limit, or else this flow ends.

For the existing method for forwarding a message by a SDN system, a SDN switch cannot send information which overruns to the controller, and the controller acquires information about traffic occupied by a message in each SDN switch by means of roll polling, therefore, the network overhead of the controller and the SDN switch is increased during the roll poling.

### SUMMARY

In order to resolve the above technical problems, embodiments of the present disclosure provide a method and device for monitoring network traffic, and a controller, so as to reduce the network overhead of the controller and a SDN switch.

In order to resolve the above technical problems, an embodiment of the present disclosure provides a method for monitoring network traffic, including:
receiving control information and an instrument and/or an instrument group from a controller; wherein the instrument group comprises one or more instruments, the control information associates a monitored object with the instrument or with an instrument of the instrument group; and
sending traffic monitoring information about the monitored object to the controller according to the received control information and the instrument and/or the instrument group.

Preferably, the instrument may include a traffic range and a reporting action; and
sending the traffic monitoring information about the monitored object to the controller according to the received control information and the instrument may include that:
sending the traffic monitoring information about the monitored object to the controller according to the reporting action of the instrument corresponding to the monitored object, when traffic occupied by the monitored object is beyond the traffic range of the instrument corresponding to the monitored object.

Preferably, the instrument group may include a total traffic range or a total reporting action.

Preferably, sending the traffic monitoring information about the monitored object to the controller according to the received control information and the instrument group may include:
sending the traffic monitoring information about the monitored object to the controller according to a reporting action of the instrument of the instrument group, when traffic occupied by the monitored object is beyond a traffic range of the instrument of the instrument group; or
sending the traffic monitoring information about the monitored object to the controller according to a reporting action of the instrument of the instrument group , when a sum of traffic occupied by all monitored objects corresponding to the instrument group is beyond the total traffic range of the instrument group; or
sending the traffic monitoring information about the monitored object to the controller according to the total reporting action of the instrument group , when a sum of traffic occupied by all monitored objects corresponding to the instrument group is beyond the total traffic range of the instrument group.

Preferably, the monitored object may include a message or a port of a SDN switch.

Preferably, the traffic monitoring information may include one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

An embodiment of the present disclosure further provides a method for monitoring network traffic, including:
sending control information and an instrument and/or an instrument group to a SDN switch; where the instrument group includes one or more instruments, the control information associates a monitored object with the instrument or with an instrument of the instrument group; and
receiving traffic monitoring information about the monitored object from the SDN switch.

Preferably, the instrument may include a traffic range and a reporting action.

Preferably, the instrument group may include a total traffic range or a total reporting action.

An embodiment of the present disclosure further provides a device for monitoring network traffic, at least including:
a receiving module, configured to receive control information and an instrument and/or an instrument group from a controller; wherein the instrument group comprises one or more instruments, the control information associates a monitored object with the instrument or with an instrument of the instrument group; and
a sending module, configured to send traffic monitoring information about the monitored object to the controller according to the received control information and the instrument and/or the instrument group.

Preferably, the instrument may include a traffic range and a reporting action; and
the sending module may be further configured to send the traffic monitoring information about the monitored object to the controller according to the reporting action of the instrument corresponding to the monitored object, when traffic occupied by the monitored object is beyond the traffic range of the instrument corresponding to the monitored object.

Preferably, the instrument group may include a total traffic range or a total reporting action; and
the sending module may be further configured to:
send the traffic monitoring information about the monitored object to the controller according to a reporting action of the instrument of the instrument group, when traffic occupied by the monitored object is beyond a traffic range of the instrument of the instrument group; or
send the traffic monitoring information about the monitored object to the controller according to a reporting action of the instrument of the instrument group , when a sum of traffic occupied by all monitored objects corresponding to the instrument group is beyond the total traffic range of the instrument group; or
send the traffic monitoring information about the monitored object to the controller according to the total reporting action of the instrument group , when a sum of traffic occupied by all monitored objects corresponding to the instrument group is beyond the total traffic range of the instrument group.

An embodiment of the present disclosure further provides a controller, at least including:
a sending module, configured to send control information and an instrument and/or an instrument group to a SDN switch; wherein the instrument group comprises one or more instruments, the control information associates a monitored object with the instrument or with an instrument of the instrument group; and
a receiving module, configured to receive traffic monitoring information about the monitored object from the SDN switch.

Preferably, the instrument may include a traffic range and a reporting action.

Preferably, the instrument group may include a total traffic range or a total reporting action.

Preferably, the monitored object may include a message or a port of the SDN switch.

Preferably, the traffic monitoring information may include one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

Compared with the existing technology, the technical solutions of the embodiments of the present disclosure include: control information and an instrument and/or an instrument group sent by a controller are received, wherein the instrument group includes one or more instruments, and the control information associates a monitored object with the instrument or with an instrument of the instrument group; and traffic monitoring information about the monitored object is sent to the controller according to the received control information and the instrument and/or the instrument group. With the technical solution according to the present disclosure, since the SDN switch may send traffic monitoring information about the monitored object to the controller according to the received control information and the instrument group, the network overhead of the controller and the SDN switch is reduced.

### BRIEF DESCRIPTION OF THE DRAWINGS

The drawings of embodiments of the present disclosure will be illustrated below, and the drawings are used to facilitate understanding of the present disclosure, and to explain the present disclosure together with the specification, but not to limit the scope of the present disclosure.
Fig. 1 is a flow chart of an existing method for forwarding a message by a SDN system;
Fig. 2 is a flow chart of a method for monitoring network traffic according to the present disclosure;
Fig. 3 is a flow chart of another method for monitoring network traffic according to the present disclosure;
Fig. 4 is a structure diagram of a device for monitoring network traffic according to the present disclosure; and
Fig. 5 is a structure diagram of a controller according to the present disclosure.

### DETAILED DESCRIPTION

For a better understanding by the skilled person in the art, the present disclosure is further described in conjunction with drawings hereinafter, however, it is not intended to limit the scope of the present disclosure.

Referring to Fig. 2, the present disclosure provides a method for monitoring network traffic, including step 200 and step 201.

Step 200 includes that control information and an instrument and/or an instrument group sent by a controller are received, wherein the instrument group includes one or more instruments, and the control information associates a monitored object with the instrument or with an instrument of the instrument group.

In this step, the instrument includes a traffic range and a reporting action.

In this step, the instrument group includes a total traffic range or a total reporting action.

In this step, the monitored object includes a message or a port of a software defined network SDN switch.

Step 201 includes that traffic monitoring information about the monitored object is sent to the controller according to the received control information and the instrument and/or the instrument group.

In this step, sending traffic monitoring information about the monitored object to the controller according to the received control information and the instrument includes:
sending traffic monitoring information about the monitored object to the controller according to the reporting action of the instrument corresponding to the monitored object, when traffic occupied by the monitored object is beyond the traffic range of the instrument corresponding to the monitored object.

In this step, sending the traffic monitoring information about the monitored object to the controller according to the received control information and the instrument group includes:
sending the traffic monitoring information about the monitored object to the controller according to a reporting action of the instrument of the instrument group, when traffic occupied by the monitored object is beyond a traffic range of the instrument of the instrument group; or
sending the traffic monitoring information about the monitored object to the controller according to a reporting action of the instrument of the instrument group, when a sum of traffic occupied by all monitored objects corresponding to the instrument group is beyond the total traffic range of the instrument group; or
sending the traffic monitoring information about the monitored object to the controller according to the total reporting action of the instrument group , when a sum of traffic occupied by all monitored objects corresponding to the instrument group is beyond the total traffic range of the instrument group.

In this step, the traffic control information includes one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

In the present disclosure, since the SDN switch sends the traffic monitoring information about the monitored object to the controller according to the received control information and the instrument group, the network overhead of the controller and the SDN switch is reduced.

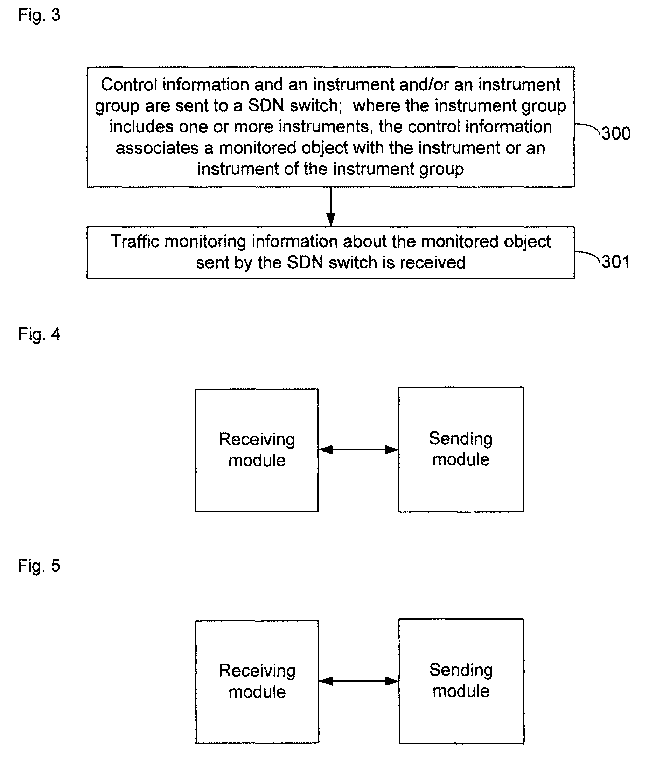

Referring to Fig. 3, the present disclosure further provides a method for monitoring network traffic, including step 300 and step 301.

Step 300 includes that control information and an instrument and/or an instrument group are sent to the SDN switch; where the instrument group includes one or more instruments, the control information associates a monitored object and the instrument or an instrument of the instrument group.

In this step, the instrument includes a traffic range and a reporting action.

In this step, the instrument of the instrument group includes: a traffic range or a total traffic range, and a reporting action or a total reporting action.

Step 301 includes that traffic monitoring information about the monitored object sent by the SDN switch is received.

Referring to Fig. 4, the present disclosure further provides a device for monitoring network traffic, at least including:
a receiving module, configured to receive control information and an instrument and/or an instrument group from a controller; wherein the instrument group comprises one or more instruments, the control information associates a monitored object with the instrument or with an instrument of the instrument group; and
a sending module, configured to send traffic monitoring information about the monitored object to the controller according to the received control information and the instrument and/or the instrument group.

In the device for monitoring network traffic according to the present disclosure, the instrument includes a traffic range and a reporting action; and
the sending module is further configured to send the traffic monitoring information about the monitored object to the controller according to the reporting action of the instrument corresponding to the monitored object, when traffic occupied by the monitored object is beyond the traffic range of the instrument corresponding to the monitored object.

In the device for monitoring network traffic according to the present disclosure, the instrument group includes a total traffic range or a total reporting action; and
the sending module is further configured to:
send the traffic monitoring information about the monitored object to the controller according to a reporting action of the instrument of the instrument group, when traffic occupied by the monitored object is beyond a traffic range of the instrument of the instrument group; or
send the traffic monitoring information about the monitored object to the controller according to a reporting action of the instrument of the instrument group , when a sum of traffic occupied by all monitored objects corresponding to the instrument group is beyond the total traffic range of the instrument group; or
send the traffic monitoring information about the monitored object to the controller according to the total reporting action of the instrument group , when a sum of traffic occupied by all monitored objects corresponding to the instrument group is beyond the total traffic range of the instrument group.

Referring to Fig. 5, the present disclosure further provides a controller, at least including:
a sending module, configured to send control information and an instrument and/or an instrument group to a SDN switch; wherein the instrument group comprises one or more instruments, the control information associates a monitored object with the instrument or with an instrument of the instrument group; and
a receiving module, configured to receive traffic monitoring information about the monitored object from the SDN switch.

In the controller according to the present disclosure, the instrument includes a traffic range and a reporting action.

In the controller according to the present disclosure, the instrument group includes a total traffic range or a total reporting action.

In the controller according to the present disclosure, the monitored object includes a message or a port of the SDN switch.

In the controller according to the present disclosure, the traffic monitoring information includes one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

It should be understood by the skilled in the art that, the sending module and the receiving module described above may be both implemented by an application processor (AP), a central processing unit (CPU), a digital signal processor (DSP) or a field programmable gate array (FPGA). For example, an antenna system may be further used to implement the sending module and the receiving module.

It is to note that, the above embodiments are only to facilitate understanding by the skilled in the art, but not to limit the scope of the present disclosure. Any obvious modifications and alternatives made by the skilled in the art shall fall within the scope of the present disclosure without departing from the inventive concept of the present disclosure.

### INDUSTRIAL APPLICABILITY

With the technical solutions of the present disclosure, a SDN switch may send traffic monitoring information about the monitored object to a controller according to received control information and an instrument and/or an instrument group, therefore, the network overhead of the controller and the SDN switch is reduced.

## Claims

1. A method for monitoring network traffic, comprising:
receiving control information and an instrument and/or an instrument group from a controller; wherein the instrument group comprises one or more instruments, the control information associates a monitored object with the instrument or with an instrument of the instrument group; and
sending traffic monitoring information about the monitored object to the controller according to the received control information and the instrument and/or the instrument group.

2. The method according to claim 1, wherein
the instrument comprises a traffic range and a reporting action; and
sending the traffic monitoring information about the monitored object to the controller according to the received control information and the instrument comprises:
sending the traffic monitoring information about the monitored object to the controller according to the reporting action of the instrument corresponding to the monitored object, when traffic occupied by the monitored object is beyond the traffic range of the instrument corresponding to the monitored object.

3. The method according to claim 1, wherein the instrument group comprises a total traffic range or a total reporting action.

4. The method according to claim 3, wherein
sending the traffic monitoring information about the monitored object to the controller according to the received control information and the instrument group comprises:
sending the traffic monitoring information about the monitored object to the controller according to a reporting action of the instrument of the instrument group, when traffic occupied by the monitored object is beyond a traffic range of the instrument of the instrument group; or
sending the traffic monitoring information about the monitored object to the controller according to a reporting action of the instrument of the instrument group , when a sum of traffic occupied by all monitored objects corresponding to the instrument group is beyond the total traffic range of the instrument group; or
sending the traffic monitoring information about the monitored object to the controller according to the total reporting action of the instrument group , when a sum of traffic occupied by all monitored objects corresponding to the instrument group is beyond the total traffic range of the instrument group.

5. The method according to claim 1, wherein the monitored object comprises a message or a port of a Software Defined Network, SDN, switch.

6. The method according to claim 5, wherein the traffic monitoring information comprises one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

7. A method for monitoring network traffic, comprising:
sending control information and an instrument and/or an instrument group to a Software Defined Network, SDN, switch; wherein the instrument group comprises one or more instruments, the control information associates a monitored object with the instrument or with an instrument of the instrument group; and
receiving traffic monitoring information about the monitored object from the SDN switch.

8. The method according to claim 7, wherein the instrument comprises a traffic range and a reporting action.

9. The method according to claim 7, wherein the instrument group comprises a total traffic range or a total reporting action.

10. A device for monitoring network traffic, at least comprising:
a receiving module, configured to receive control information and an instrument and/or an instrument group from a controller; wherein the instrument group comprises one or more instruments, the control information associates a monitored object with the instrument or with an instrument of the instrument group; and
a sending module, configured to send traffic monitoring information about the monitored object to the controller according to the received control information and the instrument and/or the instrument group.

11. The device according to claim 10, wherein
the instrument comprises a traffic range and a reporting action; and
the sending module is further configured to send the traffic monitoring information about the monitored object to the controller according to the reporting action of the instrument corresponding to the monitored object, when traffic occupied by the monitored object is beyond the traffic range of the instrument corresponding to the monitored object.

12. The device according to claim 10, wherein
the instrument group comprises a total traffic range or a total reporting action; and
the sending module is further configured to:
send the traffic monitoring information about the monitored object to the controller according to a reporting action of the instrument of the instrument group, when traffic occupied by the monitored object is beyond a traffic range of the instrument of the instrument group; or
send the traffic monitoring information about the monitored object to the controller according to a reporting action of the instrument of the instrument group , when a sum of traffic occupied by all monitored objects corresponding to the instrument group is beyond the total traffic range of the instrument group; or
send the traffic monitoring information about the monitored object to the controller according to the total reporting action of the instrument group , when a sum of traffic occupied by all monitored objects corresponding to the instrument group is beyond the total traffic range of the instrument group.

13. A controller, at least comprising:
a sending module, configured to send control information and an instrument and/or an instrument group to a Software Defined Network, SDN, switch; wherein the instrument group comprises one or more instruments, the control information associates a monitored object with the instrument or with an instrument of the instrument group; and
a receiving module, configured to receive traffic monitoring information about the monitored object from the SDN switch.

14. The controller according to claim 13, wherein the instrument comprises a traffic range and a reporting action.

15. The controller according to claim 13, wherein the instrument group comprises a total traffic range or a total reporting action.

16. The controller according to claim 13, wherein the monitored object comprises a message or a port of the SDN switch.

17. The controller according to claim 16, wherein the traffic monitoring information comprises one or more of:
traffic occupied by the message, traffic occupied by the port of the SDN switch, a sum of traffic occupied by each message in the instrument group, information indicating that traffic occupied a message is beyond a traffic range of an instrument corresponding to this message, information indicating that a sum of traffic occupied by each message in the instrument group is beyond a total traffic range of the instrument group, and information indicating that traffic occupied by the port of the SDN switch is beyond a traffic range of an instrument corresponding to the SDN switch.

18. A storage medium, having stored computer programs thereon for executing a method for monitoring network traffic according to any one of claims 1 to 9.
